# EUROPÄISCHE PATENTSCHRIFT

(11) **EP 1 266 281 B1**
(45) Veröffentlichungstag und Bekanntmachung des Hinweises auf die Patenterteilung: **24.01.2007**
(21) Anmeldenummer: 00991792.3
(22) Anmeldetag: 20.12.2000
(51) Int. Cl.: G06F 3/14, B60R 16/02

(54) **ELEKTRONISCHES SYSTEM**
ELECTRONIC SYSTEM
SYSTEME ELECTRONIQUE

(30) Priorität: 12.01.2000 DE 10000922
(43) Veröffentlichungstag der Anmeldung: 18.12.2002
(73) Patentinhaber: Volkswagen Aktiengesellschaft, 38436 Wolfsburg (DE)
(72) Erfinder: BUSSE, Gerald, 31141 Hildesheim (DE)
(86) Internationale Anmeldenummer: PCT/EP2000/013003
(87) Internationale Veröffentlichungsnummer: WO 2001/052049

(56) Entgegenhaltungen:
- EP-A- 0 272 877
- EP-A- 0 277 014
- EP-A- 0 392 411
- WO-A-99/08897
- WO-A-99/35008
- DE-A- 19 640 735
- US-A- 4 442 424
- US-A- 5 325 082

## Beschreibung

Die Erfindung betrifft ein elektronisches System, das aus einer Vielzahl von elektronischen Komponenten besteht.

Ein derartiges System ist beispielsweise die Kraftfahrzeug-Komfortelektronik, die beispielsweise eine Audio-Videoanlage, ein Navigationssystem, eine Klimaanlage und andere ähnliche Komponenten umfaßt. Dabei sind die einzelnen Komponenten autark konzeptioniert, also allein für ihr jeweiliges Anwendungsgebiet voll funktionsfähig. Hierzu verfügen die Komponenten über eine eigene Ein- und Ausgabeeinheit und ein eigenes Steuergerät, wobei Hard- und Software in einem gemeinsamen Gehäuse vereint sind. Aufgrund des begrenzten Bauraums in Kraftfahrzeugen sind verschiedene Anstrengungen unternommen worden, um eine effizientere Ausbildung derartiger Systeme zu ermöglichen. Zum einen wurden Multifunktionsbedieneinheiten entwickelt, die als gemeinsame Ein- und Ausgabeeinheit für eine Vielzahl von Komponenten dienen. Gemeinsam ist den verschiedenen Komponenten von Muttifunktionsbedieneinheiten eine zentrale graphische Oberfläche, die durch einen Monitor oder ein LCD-Display gebildet wird, wobei auch Touch-Screen-Ausbildungen bekannt sind. Dabei ist dieser Anzeigeeinheit ein Steuergerät zugeordnet, das die jeweiligen Eingaben interpretiert und an die zugehörigen Komponenten bzw. deren Steuergeräte weitergibt. Wesentlicher Vorteil dieser Multifunktionsbedieneinheiten ist, daß die ansonsten in der Konsole einzubauenden separaten Ein- und Ausgabeeinheiten entfallen. Des weiteren ist es bekannt, die verschiedenen Komponenten über eine Busstruktur miteinander zu verbinden. Dadurch können die verschiedenen Steuergeräte auf die Daten der anderen Steuergeräte und Sensoren zugreifen, wodurch die mehrfache Erfassung von bestimmten Daten eingespart werden kann. Nachteilig an allen bekannten elektrischen Systemen ist die mangelnde Zugriffsmöglichkeit einer elektronischen Komponente auf Teile anderer elektrischer Komponenten, so daß eine Vielzahl von redundanten Bauteilen verwendet wird, die insgesamt das elektrische System verteuern und einen großen Bauraum einnehmen. Des weiteren besitzen die elektrischen Komponenten autarker Geräte meist proprietäre Schnittstellen, so daß deren Datentausch streng limitiert und Synergien der Funktionen meist nicht möglich sind. Ein weiterer Nachteil ist, dass bei Systemeniveiterungen oder -verbesserungen meist die elektronischen Komponenten ausgetauscht werden müssen.

Aus der DE 196 40 735 A1 ist ein Telematikgerät bekannt, in dem ein Autoradio mit einem RDS-Modul, einem Funktelefon, einem Ortungs- und Navigationssystem in einem Gehäuse angeordnet sind.

Aus der EP 0 392 411 A2 ist ein elektronisches Steuerungssystem für Kraftfahrzeuge bekannt, umfassend eine Vielzahl von elektronischen Komponenten und einer zentralen Steuereinheit, wobei die elektronischen Komponenten und die zentrale Steuereinheit über eine Busstruktur verbunden sind, wobei die zentrale Steuereinheit einen Speicher umfasst, in dem die Ansteuerprogramme der Komponenten gespeichert sind.

Aus der US-4, 442, 424 ist ein Verfahren zur flexiblen Darstellung verschiedener Parameter in einem Kraftfahrzeug bekannt, die durch verschiedene verteilte Sensoren erfasst werden und auf einem zentralen Display dargestellt werden, wobei die Art der Darstellung veränderbar ist.

Aus der EP 0 277 014 A2 ist ein zentrales Unterhaltungssystem bekannt, insbesondere zum Einsatz in einem Flugzeug, wo zentral Video-, Audio- und Fernsehsignale an die Sitzplätze übertragen werden.

Aus der US-5, 325,082 ist ein Kraftfahrzeug-Informationsspeichersystem bekannt, wobei die Daten von ausgewählten Sensoren in einem separaten Sub-Speicher-System abgespeichert werden, auf die eine zentrale Steuereinheit zugreifen kann.

Aus der EP 0 272 877 A2 ist ein graphisches Anzeigesystem für ein Kraftfahrzeug bekannt, umfassend ein Anzeigesteuergerät mit einem Eingangs/- Ausgangskanal, eine Datenverbindung zum Übertragen von Daten und Kommandos zwischen Daten-Prozessoren, einen Master-Prozessor zum Erzeugen von Kontroll-Signalen und Antworten auf Kontroll-Signale von ausgewählten System-Funktionen, wobei dem Master-Prozessor ein Speicher zugeordnet ist, in dem Master-Daten und -Kommandos und ein Master-Kontroll-Programm für die Master-Funktionen in dem System abgelegt sind, wobei die Master-Funktionen die Steuerung der Anzeige von Graphiken und Texten auf der Anzeige beinhalten.

Aus der WO 99/35008 A1 ist ein Computer-System in einem Kraftfahrzeug bekannt, wobei das System als offene Plattform für verschiedene Anwendungen konzipiert ist, die vom Nutzer installiert werden können.

Aus der WO 99/08897 ist ein elektronisches System bekannt, umfassend eine Vielzahl von elektronischen Komponenten und einer zentralen Steuereinheit, wobei die elektronischen Komponenten und die zentrale Steuereinheit über eine Busstruktur miteinander verbunden sind, die zentrale Steuereinheit einen Speicher umfasst, in dem die elektronischen und funktionalen Parameter jeder elektronischen Komponente abgelegt sind und über die zentrale Steuereinheit in Abhängigkeit von den elektronischen und funktionalen Parametern aller elektronischen Komponenten eine Funktionsauswahl erstellt und über ein zentrales graphisches Interface dargestellt ist, wobei der zentralen Steuereinheit und jeder elektronischen Komponente eine Ebene zugeordnet ist, in der die zentrale Steuereinheit und die elektronischen Komponenten in einem geräteunspezifischen Datenformat abgebildet sind, wobei einem über das zentrale graphische Interface eingegebenen Befehl zur ausschließlichen Ansteuerung der elektronischen Komponenten über die zentrale Steuereinheit in der zentralen Steuereinheit eine geräteunspezifische Funktion der Funktionsauswahl zugeordnet wird, die hierzu notwendigen elektronischen Komponenten einschließlich der geräteunspezifischen Ansteuerbefehle zusammengestellt und in gerätespezifische Steuerungsbefehle umgesetzt und über die Busstruktur an die jeweiligen elektronischen Komponenten übertragen werden.

Der Erfindung liegt daher das technische Problem zugrunde, ein flexibles und skalierbares elektronisches System zu schaffen, das einfach und kompakt ausgestaltet ist und verbesserte Upgrade- und funktionale Integrations-Möglichkeiten aufweist.

Die Lösung des technischen Problems ergibt sich durch den Gegenstand mit den Merkmalen des Patentanspruchs 1. Weitere vorteilhafte Ausgestaltungen der Erfindung ergeben sich aus den Unteransprüchen.

Hierzu umfasst ein elektronisches System eine Vielzahl von elektronischen Komponenten und eine zentrale Steuereinheit, wobei die elektronischen Komponenten und die zentrale Steuereinheit über eine Busstruktur miteinander verbunden sind, die zentrale Steuereinheit einen Speicher umfasst, in dem die elektrischen und funktionalen Parameter jeder elektronischen Komponente abgelegt sind und über die zentrale Steuereinheit in Abhängigkeit von den elektrischen und funktionalen Parametern aller elektronischen Komponenten eine Funktionsauswahl erstellt und über ein zentrales graphisches interface dargestellt ist, wobei der zentralen Steuereinheit und jeder elektrischen Komponente eine Ebene zugeordnet ist, in der die zentrale Steuereinheit und die elektrischen Komponenten in einem geräteunspezifischen Datenformat abgebildet sind, wobei einem über das zentrale graphische Interface eingegebenen Befehl zur ausschließlichen Ansteuerung der elektrischen Komponenten über die zentrale Steuereinheit in der zentralen Steuereinheit eine geräteunspezifische Funktion der Funktionsauswahl zugeordnet wird, die hierzu notwendigen elektrischen Komponenten einschließlich der geräteunspezifischen Ansteuerbefehle zusammengestellt und in gerätespezifische Steuerungsbefehle umgesetzt und über die Busstruktur an die jeweiligen elektrischen Komponenten übertragen werden, wobei die geräteunspezifischen Datenformate der zentralen Steuereinheit und der elektrischen Komponenten einer Abstraktions-Ebene zugeordnet sind, wohingegen die Zusammenstellung der für die geräteunspezifischen Funktion benötigten Bauteile der elektronischen Komponenten einschließlich der geräteunspezifischen Ansteuerbefehle in einer von der Abstraktions-Ebene getrennten Befehls- bzw. Anforderungs-Interpretations-Ebene stattfindet.

Dadurch kann die zentrale Steuereinheit die vorhandenen elektronischen Komponenten ansteuern und bei Bedarf auch deren Funktionalitäten miteinander fusionieren, so daß die möglichen realisierbaren Funktionen größer als die Summe der Einzel-Funktionen der elektronischen Komponenten wird. Des Weiteren erlaubt dieses elektronische System die Nutzung einzelner Bestandteile von elektronischen Komponenten für komponentenunspezifische Funktionen. Es lassen sich also beliebig Multimedia-Daten transportieren, transformieren und allein softwaretechnisch aus den Daten neue Funktionen generieren.

Ein weiterer Vorteil ist die einfache Nachrüstbarkeit des Systems, sowie dessen einfache Anpaßbarkeit an unterschiedliche Ausstattungen. Hinsichtlich der Nachrüstbarkeit wird durch das elektronische System ein "Plug and Play" realisiert. Soll eine neue elektronische Komponente in das System integriert werden, so überträgt diese in einer Anmeldeprozedur ihre Parameter an die zentrale Steuereinheit, die diese dann in den Speicher ablegt, so daß dann die zentrale Steuereinheit die neue Funktion nutzen und gegebenenfalls im graphischen Interface darstellen kann, falls die Funktionssoftware bereits für diese Erweiterungsmöglichkeiten ausgelegt ist. Ebenso können verschiedene Ausstattungen durch einfaches Austauschen der graphischen Aufbereitungs-Software für das graphische Interface bei gleichem Hardwareaufbau und gleicher Funktions-Software realisiert werden. Vorzugsweise ist die zentrale Steuereinheit als PC ausgebildet.

In einer weiteren bevorzugten Ausführungsform ist die Busstruktur als MOST-Bus (Media Oriented Systems-Transfer) ausgebildet. Die Kommunikation des elektronischen Systems mit Komponenten der Komfortelektronik in einem Kraftfahrzeug findet dann vorzugsweise über Gateways statt. Dabei kann die Kommunikation mit den sicherheitsrelevanten Komponenten, die vorzugsweise mit einem CAN-Bus verbunden sind über CAN-Gateways stattfinden, wobei die Kommunikation mit anderen Netzen wie beispielsweise den Mobilfunknetzen über ein Wireless-Gateway stattfindet.

Vorzugsweise ist das Wireless-Gateway modular ausgebildet, d.h. das Wireless-Gateway ist mit einer Vielzahl von Schnittstellen für mögliche anschließbare Sende/Empfangseinheiten zur Kommunikation mit extemen Netzen ausgebildet.

Besonders vorteilhaft läßt sich das elektronische System in einem Kraftfahrzeug für die Komfortelektronik integrieren. Prinzipiell lassen sich auch die Komponenten des Antriebes wie beispielsweise das Getriebesteuergerät integrieren, jedoch würde dies die Anforderungen hinsichtlich der Funktionssicherheit der CAN-Gateways und der jeweiligen Steuergeräte erhöhen.

Die Erfindung wird nachfolgend anhand eines bevorzugten Ausführungsbeispieles näher erläutert. Die Fig. zeigen:
- Fig. 1: ein schematisches Schichtenmodell eines elektronischen Systems und
- Fig. 2: eine schematische Darstellung des Hardware-Aufbaus eines elektronischen Systems.

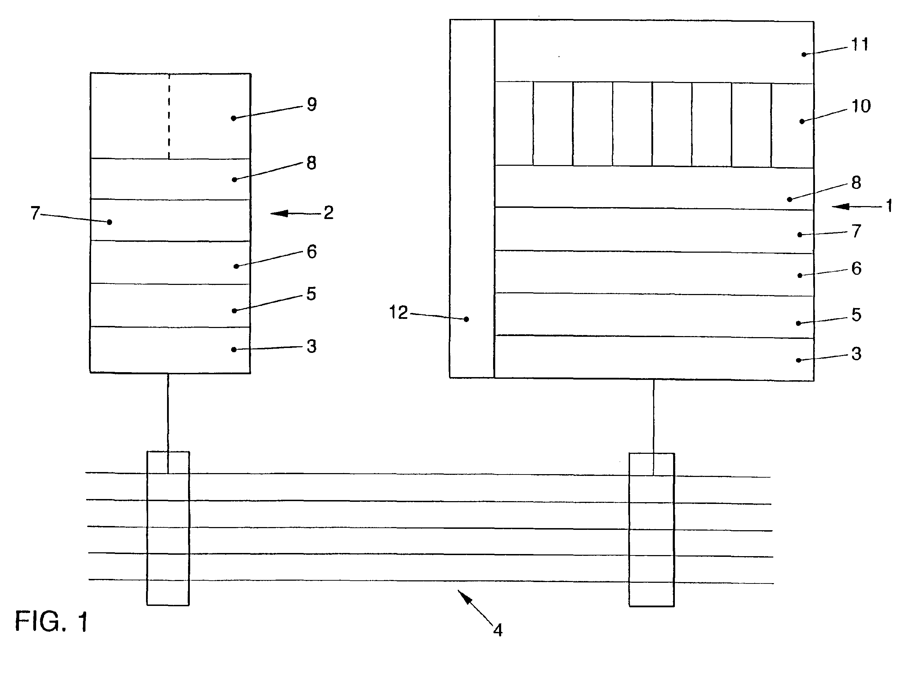

In der Fig. 1 ist ein schematisches Schichtenmodell eines elektronischen Systems dargestellt. Das elektronische System umfaßt eine zentrale Steuereinheit 1 mehrere elektronische Komponenten 2, wobei aus Gründen der Übersicht nur eine dargestellt ist. Die unterste Ebene 3 der zentralen Steuereinheit 1 und der elektronischen Komponenten 2 stellt die eigentliche Hardware dar, die physikalisch über eine Busstruktur 4 miteinander verbunden sind. Die Busstruktur 4 ist dabei vorzugsweise als MOST-Bus ausgebildet. Die nächsthöhere Ebene 5 wir durch die gerätespezifische Treibersoftware gebildet. Darüber befindet sich die Ebene 6, die durch das Betriebssystem gebildet wird. Die Ebenen 3, 5 und 6 stellen die gerätespezifischen Ebenen dar, so wie diese auch im Stand der Technik auftreten. Über dem Betriebssystem ist eine Abstraktions-Ebene 7 angeordnet. In dieser dem Betriebssystem hierarchisch übergeordneten Ebene wird die gerätespezifische elektronische Komponente 2 und die zentrale Steuereinheit 1 softwaremäßig abstrakt geräteunspezifisch definiert. Über der Abstraktions-Ebene 7 ist eine Befehls- bzw. Anforderungs- Interpretations- Ebene 8 angeordnet, die ebenfalls geräteunspezifisch ist. Die oberste Ebene 9 der elektronischen Komponenten 2 beinhaltet eine Funktions- und Parameter- Liste der elektronischen Komponenten 2. Der Inhalt beider Listen wird beim Nachrüsten oder Initialisieren einer Komponente 2 einem Speicher 12 der Steuereinheit 1 mitgeteilt. Die Funktions-Softwaremodule 10 in der zentralen Steuereinheit 1 übernehmen beliebige Funktionen wie Adressbuch, Navigation, Diagnose, Entertainment etc. Es werden damit bestehende Gerätefunktionen in Software abgebildet. Über dieser Funktions-Ebene 10 ist die graphische Benutzerschnittstelle 11 angeordnet, die gegebenenfalls noch nutzer- und servicespezifisch unterteilt ist. Vor dem eigentlichen Betrieb überträgt jede elektronische Komponente 2 seine Funktionen- und Parameter- Liste über die Busstruktur 4 an die zentrale Steuereinheit 1, die alle Funktionen- und Parameter-Listen in einem Speicher 12 abspeichert. Vereinfacht ausgedrückt teilen zunächst die elektronischen Komponenten 2 der zentralen Steuereinheit 1 mit, was sie sind und was sie können. Aus diesen Informationen stellt dann die zentrale Steuereinheit 1 die möglichen Funktionen für den Nutzer zusammen, wobei durch die Fusion einzelner Funktionen sich neue, integrierte Funktionen ergeben können. So kann beispielsweise das Adressbuch mit der Navigation kombiniert werden, wodurch Zieleingaben für die Navigation direkt aus dem Adressbuch entnehmbar sind. Des weiteren können vorhandene Komponenten für verschiedene Funktionen verwendet werden. So kann beispielsweise das gleiche CD- Abspielgerät zum Abspielen einer CD-ROM von Navigationsdaten oder einer Musik-CD-ROM verwendet werden. Hierzu meldet das beispielsweise als DVD-Wechsler ausgebildete Abspielgerät an die zentrale Steuereinheit 1, daß es sowohl Audio- als auch Navigations-DVDs lesen kann. Des weiteren teilt der DVD-Wechsler mit, welche DVD sich in welchem Schlitz des Wechslers befindet. Sollen dann Daten von einer Navigations-DVD gelesen werden, so teilt die zentrale Steuereinheit 1 dem DVD-Wechsier mit, daß es die DVD im zugehörigen Schlitz lesen soll. Der DVD-Wechsler erkennt die entsprechende DVD und stellt die zugehörigen Parameter automatisch ein.

Zur Durchführung einer Funktion gibt der Nutzer unter zur Hilfenahme des graphischen Interfaces über eine Eingabeeinheit einen Befehl ein. Dieser Befehl wird über die Busstruktur 4 an die zentrale Steuereinheit 1 übertragen. In der zentralen Steuereinheit 1 wird diesem Befehl geräteunspezifisch eine Funktion zugeordnet. Die Steuereinheit 1 stellt zusammen, welche Bauteile welcher Komponenten für die Funktion benötigt werden und wie diese angesteuert werden müssen. Dieser Vorgang findet in der Befehls- bzw. Anforderungs- Interpretations- Ebene 8 statt. Die geräteunspezifischen Steuerungsbefehle werden anschließend in gerätespezifische Steuerungsbefehle für die anzusteuernden elektronischen Komponenten 2 umgesetzt und über die Busstruktur 4 an diese übertragen. Der Daten- und Informationsaustausch zwischen elektronischen Komponenten 2 erfolgt ebenfalls über die zentrale Steuereinheit 1. Hierzu empfängt die zentrale Steuereinheit 1 die gerätespezifischen Daten einer elektronischen Komponente 2, abstrahiert diese Daten in ein geräteunspezifisches Datenformat, wandelt diese Daten in ein gerätespezifisches Datenformat der für den Empfang bestimmten elektronischen Komponente 2 um und überträgt diese gerätespezifischen Daten über die Busstruktur 4 an die elektronische Komponente 2.

Ein weiterer wesentlicher Vorteil des elektronischen Systems ist, daß die Nachrüstung mit neuen oder verbesserten elektronischen Komponenten keine Auswirkungen auf die anderen elektronischen Komponenten hat. Hierzu muß nur gegebenenfalls die Software in der zentralen Steuereinheit 1 modifiziert werden, da auch funktional zusammenwirkende elektronische Komponenten 2 hardwaremäßig entkoppelt sind und nur über die zentrale Steuereinheit 1 miteinander kommunizieren.

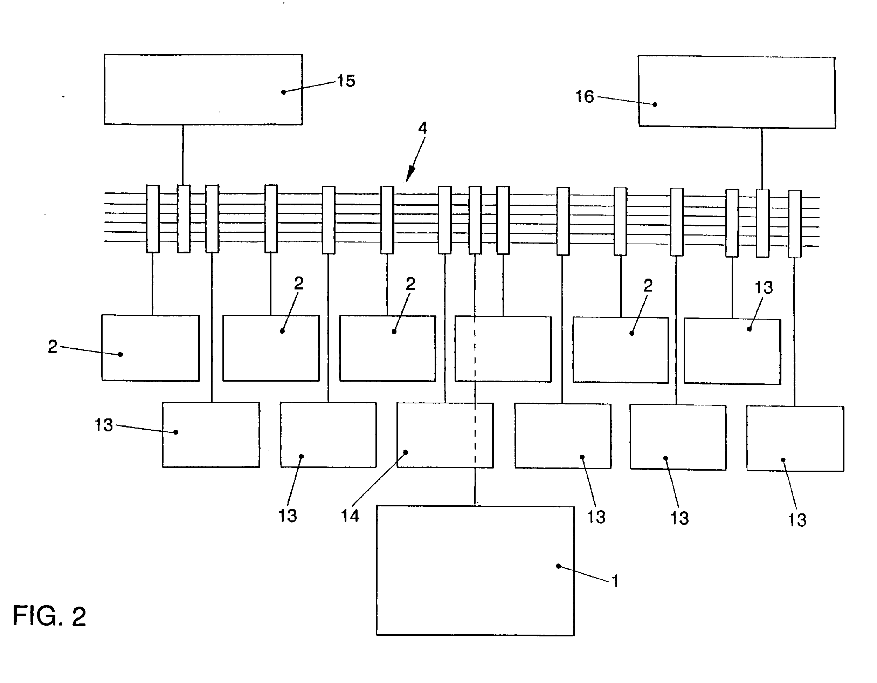

Der vereinfachte Hardware- Aufbau des elektrischen Systems ist in Fig. 2 dargestellt. Die Busstruktur 4 ist mit einer Vielzahl von multifunktionalen Ein- und Ausgabeeinheiten 13 und den elektronischen Komponenten 2 verbunden. Die Ein- und Ausgabeeinheiten 13 können dabei beispielsweise als Touch-Screen, Taster, Schalter, Tastatur, Mikrofon, Lautsprecher und als Kombi-Instrument 14 ausgebildet sein. Die elektronischen Komponenten 2 sind dabei beispielsweise CD-ROM-Lesegeräte, Radio, Kassettenrecorder usw. Die zentrale Steuereinheit 1 ist ebenfalls mit der Busstruktur 4 verbunden. Wie bereits zuvor ausgeführt, sind die elektronischen Komponenten 2 vorzugsweise nur Komfortkomponenten. Von der Systemarchitektur werden die Ein- und Ausgabeeinheiten 13, das Kombi-Instrument und die elektronischen Komponenten 2 alle gleichrangig behandelt.

Bei Anwendung des elektronischen Systems in einem Kraftfahrzeug kann es wünschenswert sein, auch Daten mit anderen Komfort- oder Antriebskomponenten auszutauschen. In einem Kraftfahrzeug sind dabei die Komponenten vorzugsweise über einen CAN-Bus miteinander verbunden. Dabei kann dieser CAN-Bus noch zusätzlich für die Komfortkomponenten in einen CAN-Komfort und für die Antriebskomponenten in einen CAN-Antrieb unterteilt sein, wobei dann die beiden CAN-Busse über ein Gateway miteinander verbunden sind. Ebenso kann die Busstruktur 4 über ein CAN-Gateway 15 mit dem CAN-Bus verbunden werden und so Daten von sicherheitsrelevanten Steuergeräten und Sensoren erhalten. Das CAN-Gateway 15 hat dabei insbesondere unter sicherheitstechnischen Aspekten zu gewährleisten, daß kein unbefugter Zugriff auf bestimmte mit dem CAN-Bus verbundene Steuergeräte stattfindet. So muß beispielsweise sichergestellt sein, daß über das CAN-Gateway 15 das Getriebesteuergerät nicht manipuliert werden kann. Die Kommunikation mit anderen externen Netzen findet über ein Wireless-Gateway 16 statt. Das Wireless-Gateway 16 ist vorzugsweise modular aufgebaut und mit Schnittstellen für alle denkbaren Empfänger ausgebildet. Beispielsweise ist das Wireless-Gateway mit entsprechenden Schnittstellen für AM/FM-Receiver, TV/DVBT-Receiver, GPS, GSM und andere Funksysteme ausgebildet. Je nach Ausstattung des Kraftfahrzeuges werden dann die entsprechenden Empfänger und gegebenenfalls Sender mit dem Wireless-Gateway 16 verbunden. Die Anpassung an verschiedene äußere Geräte geschieht dabei ebenfalls nur softwaremäßig am Wireless-Gateway 16. Der große Vorteil dieser Architektur ist, daß das Wireless-Gateway 16 somit die bereits demodulierten Daten auf die Busstruktur 4 gibt. Somit ist das elektronische System von der Empfängerseite entkoppelt und technische Änderungen wie beispielsweise Datenübertragungsformate, Sendefrequenzen etc. haben keinen Einfluss auf das elektronische System. Vielmehr muß nur entsprechend das Wireless-Gateway angepaßt werden.

In einer weiteren bevorzugten Ausführungsform kann die graphische Benutzerschnittstelle zusätzlich softwaretechnisch unterteilt bzw. abstrahiert werden. Hierzu existiert eine einheitliche Funktionssoftware, über der eine variable graphische Aufbereitungs-Software angeordnet ist. Dies soll an einem Beispiel erläutert werden. Je nach Ausstattung eines Kraftfahrzeuges bzw. typenspezifisch erfolgt die Mitteilung von Navigationsdaten unterschiedlich. Dies kann beispielsweise durch die unterschiedliche Größe der vorhandenen Anzeigeeinheiten bedingt sein. Durch die Trennung von Funktions- und Aufbereitungs-Software kann nun in allen Kraftfahrzeugen die gleiche Funktions-Software verwendet werden. Diese Funktionssoftware liefert ein Ergebnis in einem definierten Ausgabeformat. Die darüber angeordnete Ausführungs-Software ist fahrzeugspezifisch und entsprechend an die gewünschte Darstellung angepaßt. Soll die Darstellung der Navigationsdaten beispielsweise auf Wunsch des Nutzers modifiziert werden, so muß nur die Aufbereitungs-Software ausgetauscht werden. Somit kann mit minimalen Aufwand eine Vielzahl äußerlich unterschiedlicher Systeme erzeugt werden.

## Patentansprüche

1. Elektronisches System, umfassend eine Vielzahl von elektronischen Komponenten (2) und einer zentralen Steuereinheit (1), wobei die elektronischen Komponenten (2) und die zentrale Steuereinheit (1) über eine Busstruktur (4) miteinander verbunden sind, die zentrale Steuereinheit (1) einen Speicher (12) umfasst, in dem die elektrischen und funktionalen Parameter jeder elektronischen Komponente (2) abgelegt sind und über die zentrale Steuereinheit (1) in Abhängigkeit von den elektrischen und funktionalen Parametern aller elektronischen Komponenten (2) eine Funktionsauswahl erstellt und über ein zentrales graphisches Interface dargestellt ist, wobei der zentralen Steuereinheit (1) und jeder elektronischen Komponente (2) eine Ebene zugeordnet ist, in der die zentrale Steuereinheit (1) und die elektronischen Komponenten (2) in einem geräteunspezifischen Datenformat abgebildet sind, wobei einem über das zentrale graphische Interface eingegebenen Befehl zur ausschließlichen Ansteuerung der elektrischen Komponenten (2) über die zentrale Steuereinheit (1) in der zentralen Steuereinheit (1) eine geräteunspezifische Funktion der Funktionsauswahl zugeordnet wird; die hierzu notwendigen elektronischen Komponenten einschließlich der geräteunspezifischen Ansteuerbefehle zusammengestellt und in gerätespezifische Steuerungsbefehle umgesetzt und über die Busstruktur (4) an die jeweiligen elektronischen Komponenten (2) übertragen werden,
**dadurch gekennzeichnet, dass**
die geräteunspezifischen Datenformate der zentralen Steuereinheit (1) und der elektronischen Komponenten (2) einer Abstraktions-Ebene (7) zugeordnet sind, wohingegen die Zusammenstellung der für die geräteunspezifischen Funktion benötigten Bauteile der elektronischen Komponenten einschließlich der geräteunspezifischen Ansteuerbefehle in einer von der Abstraktions-Ebene (7) getrennten Befehls- bzw. Anforderungs-Interpretations-Ebene (8) stattfindet.

2. Elektronisches System nach Anspruch 1, **dadurch gekennzeichnet, dass** die zentrale Steuereinheit (1) als PC ausgebildet ist.

3. Elektronisches System nach Anspruch 1 oder 2, **dadurch gekennzeichnet, dass** die zentrale Steuereinheit (1) und/oder die elektronischen Komponenten (2) mit einem Initialisierungsprogramm ausgebildet sind, mittels dessen die elektrischen und funktionalen Parameter der elektronischen Komponenten (2) vor Inbetriebnahme durch die zentrale Steuereinheit (1) abrufbar oder an die zentrale Steuereinheit (1) übertragbar sind.

4. Elektronisches System nach einem der vorangegangenen Ansprüche, **dadurch gekennzeichnet, dass** die Busstruktur (4) als MOST- Bus ausgebildet ist.

5. Elektronisches System nach einem der vorangegangenen Ansprüche, **dadurch gekennzeichnet, dass** die Busstruktur (4) zur Kommunikation mit anderen Netzen und/oder Busstrukturen mit Gateways (15, 16) verbunden ist.

6. Elektronisches System nach einem der vorangegangenen Ansprüche, **dadurch gekennzeichnet, dass** das elektronische System als elektronisches Infotainment-System in einem Kraftfahrzeug ausgebildet ist.

## Claims

1. Electronic system, comprising a plurality of electronic components (2) and a central control unit (1), the electronic components (2) and the central control unit (1) being connected to one another via a bus structure (4), and the central control unit (1) comprising a memory (12) in which the electrical and functional parameters of each electronic component (2) are stored and a functional selection being produced by means of the central control unit (1) as a function of the electrical and functional parameters of all the electronic components (2) and being displayed via a central graphic interface, a level in which the central control unit (1) and the electronic components (2) are mapped in a device-nonspecific data format being assigned to the central control unit (1) and to each electronic component (2), and a device-nonspecific function of the functional selection being assigned to a command which is input via the central graphic interface and has the purpose of exclusively driving the electronic components (2) via the central control unit (1) in the central control unit (1); the electronic components which are necessary for this, including the device-nonspecific driving commands, being collected and converted into device-specific control commands and transmitted via the bus structure (4) to the respective electronic components (2), **characterized in that** the device-nonspecific data formats of the central control unit (1) and of the electronic components (2) are assigned to an abstraction level (7), while the collection of the parts of the electronic components which are required for the device-nonspecific function, including the device-nonspecific driving commands, is carried out on a command or request interpretation level (8) which is separate from the abstraction level (7).

2. Electronic system according to Claim 1, **characterized in that** the central control unit (1) is embodied as a PC.

3. Electronic system according to Claim 1 or 2, **characterized in that** the central control unit (1) and/or the electronic components (2) are embodied with an initialization programme by means of which the electrical and functional parameters of the electronic components (2) can be called by the central control unit (1) or transmitted to the central control unit (1) before activation occurs.

4. Electronic system according to one of the preceding claims, **characterized in that** the bus structure (4) is embodied as a MOST bus.

5. Electronic system according to one of the preceding claims, **characterized in that** the bus structure (4) is connected to gateways (15, 16) for the purpose of communication with other networks and/or bus structures.

6. Electronic system according to one of the preceding claims, **characterized in that** the electronic system is embodied as an electronic Infotainment system in a motor vehicle.

## Revendications

1. Système électronique comprenant une pluralité de composants électroniques (2) et une unité de commande centrale (1), les composants électroniques (2) et l'unité de commande centrale (1) étant reliés par une structure de bus (4), l'unité de commande centrale (1) comprenant une mémoire (12) pour stocker les paramètres électriques et fonctionnels de chaque composant électronique (2), un choix de fonctions étant établi par l'unité de commande centrale (1) en fonction des paramètres électriques et fonctionnels de tous les composants électroniques (2) et représenté par le biais d'une interface graphique centrale, une zone étant attribuée à l'unité de commande centrale (1) et à chaque composant électronique (2), dans laquelle l'unité de commande centrale (1) et les composants électroniques (2) figurent dans un format de données non spécifique à l'appareil, tandis que dans l'unité de commande centrale (1), une fonction non spécifique à l'appareil parmi le choix de fonctions est attribuée à une instruction saisie par l'intermédiaire de l'interface graphique centrale pour la commande exclusive des composants électroniques (2) par l'unité de commande centrale (1), et les composants électroniques nécessaires, y compris les instructions de commandes non spécifiques à l'appareil, sont rassemblés et convertis en instructions de commandes spécifiques à l'appareil et transmis par le biais de la structure de bus (4) vers les différents composants électroniques (2),
**caractérisé en ce que**
les formats de données de l'unité de commande centrale (1) et des composants électroniques (2) qui sont non spécifiques à l'appareil sont attribués à une zone d'abstraction (7), tandis que la composition des éléments de composants électroniques nécessaires à la fonction non spécifique à l'appareil y compris les instructions de commandes non spécifiques à l'appareil est réalisée dans une zone d'interprétation de commande ou de demande (8) séparée de la zone d'abstraction (7).

2. Système électronique selon la revendication 1, **caractérisé en ce que** l'unité de commande centrale (1) est conçue sous la forme d'un PC.

3. Système électronique selon la revendication 1 ou 2, **caractérisé en ce que** l'unité de commande centrale (1) et/ou les composants électroniques (2) sont équipés d'un programme d'initialisation permettant d'accéder aux paramètres électriques et fonctionnels des composants électroniques (2) par l'unité de commande centrale (1) avant la mise en marche ou de les transmettre à l'unité de commande centrale (1).

4. Système électronique selon l'une des précédentes revendications, **caractérisé en ce que** la structure de bus (4) est réalisée sous la forme d'un Bus MOST.

5. Système électronique selon l'une des précédentes revendications, **caractérisé en ce que** la structure de bus (4) est connectée de façon à pouvoir communiquer avec d'autres réseaux et/ou structures de bus avec Gateways (15, 16).

6. Système électronique selon l'une des précédentes revendications, **caractérisé en ce que** le système électronique est conçu comme un système d'infotainment électronique dans un véhicule automobile.
